Europäisches Patentamt

European Patent Office

Office européen des brevets

(11) Numéro de publication: **0 082 767**
**B1**

(12) **FASCICULE DE BREVET EUROPEEN**

(45) Date de publication du fascicule du brevet: **02.09.87**

(21) Numéro de dépôt: **82402294.1**

(22) Date de dépôt: **14.12.82**

(51) Int. Cl.⁴: **H 01 P 7/04,** B 29 C 43/00,
B 29 C 43/32

(54) **Procédé de montage d'un dispositif comportant une cavité hyperfréquence dans laquelle est fixé un conducteur intérieur.**

(30) Priorité: **23.12.81 FR 8124158**

(43) Date de publication de la demande:
**29.06.83 Bulletin 83/26**

(45) Mention de la délivrance du brevet:
**02.09.87 Bulletin 87/36**

(84) Etats contractants désignés:
**AT BE CH DE GB IT LI NL SE**

(56) Documents cités:
**DE-A-1 958 877**
**DE-C- 883 928**
**GB-A- 559 743**
**GB-A- 716 101**
**GB-A-1 209 213**
**US-A-2 752 577**
**US-A-3 718 865**

**ELECTRONIC ENGINEERING, vol. 41, no. 494,
avil 1969, pages 491-496, P. BRAMHAM:
"Matched vacuum window for coaxial line"
Plastics Engineering, R.3 Crawtord, Pergamon
Press, page 209**

(73) Titulaire: **ALCATEL THOMSON FAISCEAUX
HERTZIENS
55, rue Greffulhe
F-92300 Levallois-Perret Cédex (FR)**

(72) Inventeur: **Louet, Daniel
THOMSON-CSF SCPI 173, bld Haussmann
F-75379 Paris Cedex 08 (FR)**
Inventeur: **Darnois, Gilbert
THOMSON-CSF SCPI 173, bld Haussmann
F-75379 Paris Cedex 08 (FR)**

(74) Mandataire: **Weinmiller, Jürgen et al
Lennéstrasse 9 Postfach 24
D-8133 Feldafing (DE)**

Courier Press, Leamington Spa, England.

# Description

La présente invention se rapporte aux procédés de montage de dispositifs hyperfréquence comportant une cavité, un conducteur intérieur formant un résonateur linéaire et un support pour fixer ce conducteur dans la cavité, ce support étant constitué par une plaque de constante diélectrique inférieure à 2,6, au contact avec la paroi interne de la cavité et percée d'un trou qui entoure une portion du résonateur.

De tels dispositifs sont connus pour réaliser, par exemple, des oscillateurs. Dans les réalisations connues le support est généralement en polytétrafluoroéthylène, matière également connue sous la marque de fabrique téflon; ce support est usiné de manière très précise de façon à favoriser un positionnement aussi rigoureux que possible du conducteur dans la cavité. Le polytétrafluoroéthylène étant très difficile à coller, le support est le plus souvent maintenu par coincement entre deux côtés de la cavité et le conducteur est enfoncé en force dans le trou du support; mais une telle mise en place du support et du conducteur n'est pas facile à réaliser avec précision et n'assure pas une bonne rigidité mécanique du dispositif lorsque celui-ci est soumis à des contraintes du genre accélérations ou vibrations importantes.

La présente invention a pour but d'éviter ces inconvénients en proposant un dispositif dans lequel la fixation du support dans la cavité et du conducteur dans le support se fait par thermocompression du support.

Le brevet DE—C—883 928 décrit un circuit oscillateur formé d'une double ligne concentrique comprenant une cavité dans laquelle est disposé un conducteur.

Un article paru dans "Electronic Engineering" (volume 41, numéro 494, avril 1969, pages 491—496) intitulé "Matched vacuum window for coaxial line" décrit un disque isolant supportant un conducteur intérieur d'une ligne coaxiale.

Un article paru dans "Plastic Engineering" R. J. Crawford (Pergamon Press p. 209) décrit le formage à chaud dans une cavité chauffée avec une cale et un piston.

L'invention propose un procédé de montage d'un dispositif comportant une cavité hyperfréquence, un conducteur intérieur et un support pour fixer le conducteur dans la cavité, ce support étant constitué par une plaque de constante diélectrique inférieure à 2,6, au contact de la paroi interne de la cavité, et percée d'un trou à travers lequel passe le conducteur, la cavité comportant une première partie destinée à être rendue solidaire du support, au moins une entaille étant pratiquée dans la paroi interne de la première partie et dans le conducteur, la plaque étant disposée dans la première partie avec l'un de ses bords recouvrant l'entaille de la première partie, le conducteur traversant un trou percé dans la plaque et ayant son entaille à l'intérieur du trou, caractérisé en ce qu'un ensemble mécanique comportant au moins une cale et un piston à monter de part et d'autre de la plaque, est disposé de manière à délimiter avec la première partie et le conducteur un volume contenant la plaque, en ce que la plaque est chauffée à une température T puis comprimée à cette température sous une pression P, donnée par le piston, puis ramenée à basse température par refroidissement forcé, puis en ce que l'ensemble mécanique est retiré.

La présente invention sera mieux comprise et d'autres caractéristiques apparaîtront à l'aide de la description ci-après et des figures s'y rapportant qui représentent:

— les figures 1, 2 et 3 des vues schématiques en perspective montrant les différentes phases d'un exemple d'assemblage permettant de réaliser un dispositif obtenu selon le procédé de l'invention;

— la figure 4 une vue schématique en coupe illustrant une partie d'un traitement qui permet d'obtenir un dispositif obtenu selon le procédé de l'invention;

— la figure 5 une vue partielle d'un dispositif obtenu selon le procédé de l'invention, après traitement.

Sur les différentes figures les éléments correspondant portent les mêmes repères.

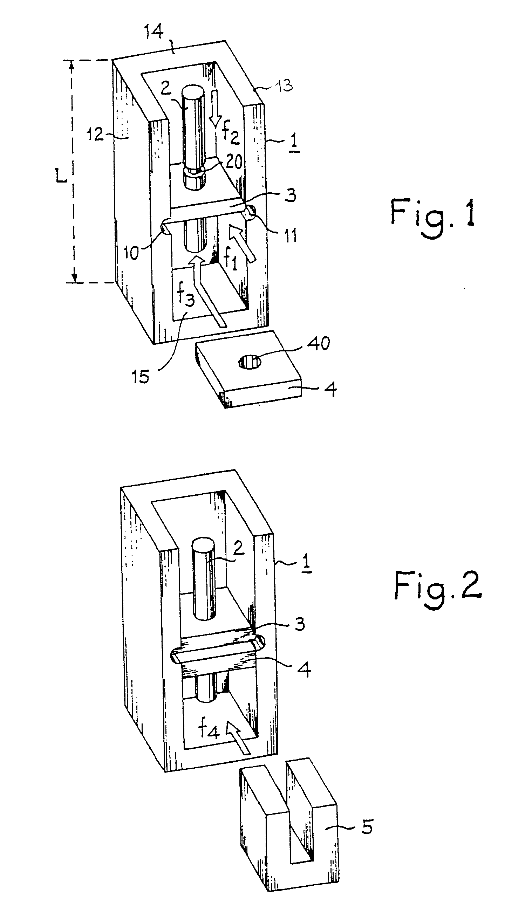

La figure 1 est une vue schématique montrant une partie d'une cavité, 1, un conducteur interne 2 de forme cylindrique formant un résonateur linéaire, destiné à être monté dans la cavité et un support, 3, en matière plastique thermocompressible, destiné à permettre le montage du conducteur 2 dans la cavité 1.

La partie de la cavité 1 qui est représentée sur la figure 1 est un ensemble monobloc fait de quatre côtés d'un parallélépipède droit allongé: un fond 14 de longueur L, deux côtés parallèles 12, 13 de même longueur que le fond et une plaque d'extrémité 15. La cavité comporte également une autre plaque d'extrémité et un couvercle, non représentés sur la figure 1, qui sont vissés sur l'ensemble monobloc au dernier moment lors du montage de l'oscillateur qu'il est prévu de réaliser avec cette cavité, c'est-à-dire au moment où le conducteur 2 aura été fixé solidement dans l'ensemble monobloc ainsi que les différents autres composants, non représentés, tels que le transistor de sortie dont la base est connecté à l'extrémité du conducteur 2 la plus proche de la plaque d'extrémité 15.

Les côtés 12, 13 sont, chacun, creusés d'une rainure 10, 11, perpendiculaire au fond 14 de l'ensemble monobloc de la cavité; ces rainures sont placées en face l'une de l'autre. Le support 3 est une plaque qui est glissée (flèche $f_1$) dans la cavité, selon un plan parallèle au fond 15 et passant par les rainures 10 et 11; la plaque pénètre pratiquement jusqu'au fond de ces rainures. La plaque 3 est percée d'un trou dans lequel est introduit le conducteur 2 (une flèche $f_2$); le conducteur 2 présente sensiblement en son milieu, une rainure 20 en forme de gorge circulaire et, dans la position que doit occuper le conducteur à l'intérieur de la cavité, cette rainure se trouve cachée dans le trou de la plaque 3.

Quand la plaque 3 et le conducteur 2 sont placés dans la cavité, une cale 4, de forme plate et percée d'un trou 40, est introduite au fond de la cavité, entre la plaque d'extrémité 15 et le conducteur 2; le contour de cette plaque est un parallélépipède rectangle dont trois des bords sont alors respectivement en contact avec les côtés 12 et 13 et avec le fond 14, le quatrième bord étant dans le même plan que les bords des côtés 12, 13 opposés au fond 14. Quand elle est au fond de la cavité la cale 4 est amenée, par translation, en contact avec le support 3; le trou 40 a des dimensions et une position qui sont étudiées pour que, dans cette translation, ses bords soient en contact glissant autour du conducteur 2 placé à la distance qu'il devra occuper par rapport aux côtés 12, 13 et au fond 14. L'introduction de la cale 4 dans la cavité puis sa translation en direction de la plaque 3, ont été symbolisées par une flèche, $f_3$, sur la figure 1.

La figure 2 montre la cavité 1 après que la plaque 3, le conducteur 2 et la cale 4 y aient été introduits comme indiqué à l'aide de la figure 1. La figure 2 montre également une cale 5 en forme de U dont la hauteur ajoutée à l'épaisseur de la cale 4, est égale à la distance à laquelle le support 3 doit se trouver du fond 15 dans le dispositif à réaliser; cette cale 5 est enfoncée dans la cavité, entre la cale 4 et la plaque d'extrémité 15 en position telle que les deux barres verticales du U passent de part et d'autre du conducteur 2 (flèche $f_4$).

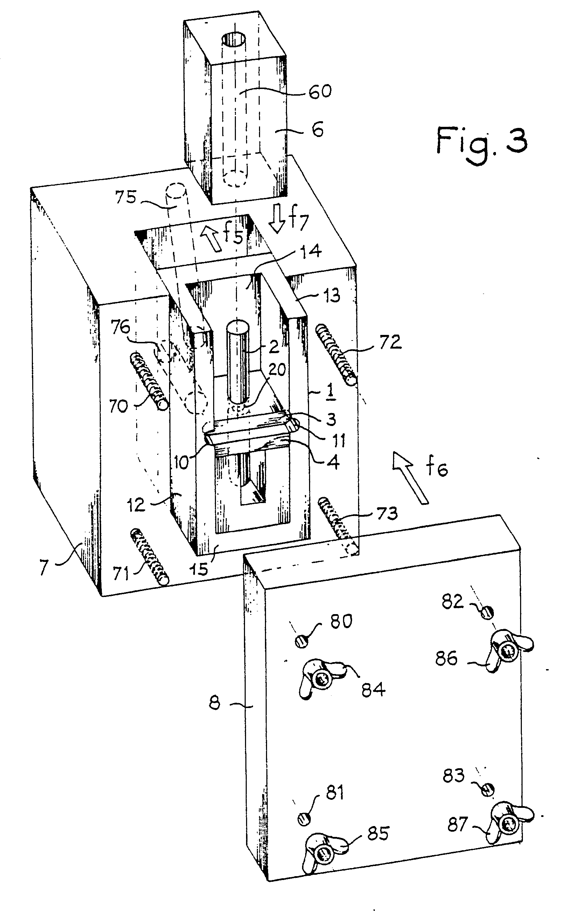

Sur la figure 3 les pièces 1 à 5 sont dans la position qu'elles occupent après le montage décrit à l'aide des figures 1 et 2; cet ensemble est introduit (flèche $f_5$) dans un logement pratiqué dans un bloc 7 muni de quatre tiges filetées 70 à 73; un couvercle 8, percé de quatre trous 80 à 83 destinés respectivement au passage des tiges filetées 70 à 73, est amené en contact avec le bloc 7 (flèche $f_6$) et est bloqué dans cette position grâce à quatre écrous 84 à 87 qui sont vissés respectivement sur les quatre tiges 70 à 73. Le bloc 7 et le couvercle 8 forment ainsi une enceinte à une seulee ouverture et la paroi intérieure de cette enceinte est usinée pour être en contact étroit avec la paroi extérieure du fond 14 des côtés parallèles 12 et 13 de la plaque d'extrémité 15 et avec les bords de la cale 4 et des côtés 12 et 13 opposés au fond 14.

Comme le montre la figure 3 un piston 6 est introduit (flèche $f_7$) dans l'enceinte 7—8; ce piston est réalisé pour remplir l'espace libre de la cavité 1, situé au-dessus de la plaque 3 et comporte à cet effet un trou 60 afin de pouvoir glisser entre la cavité et le couvercle 8 lorsque ce dernier est fixé au bloc 7. La hauteur du piston 6 est calculée pour qu'il dépasse de l'ouverture de l'enceinte 7—8 quand il arrive en appui sur la plaque 3.

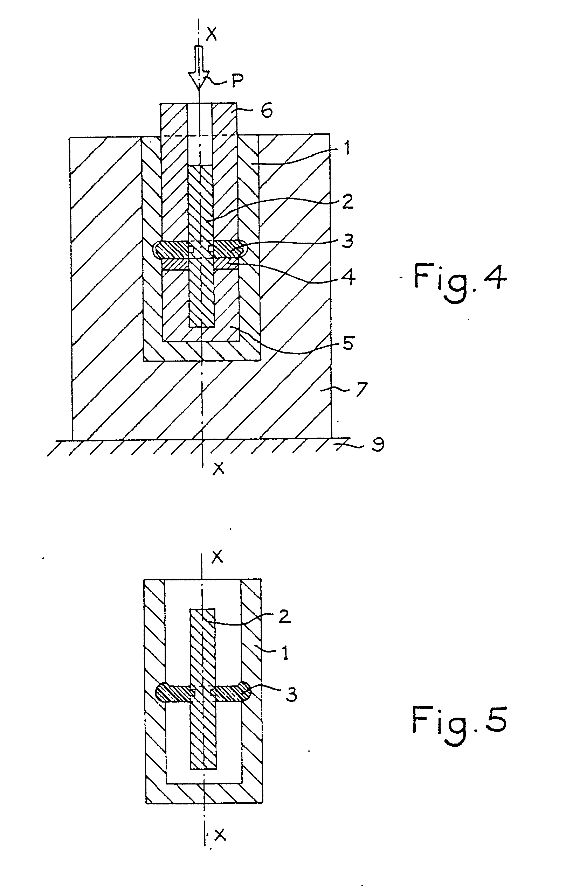

Il est à noter que le bloc 3 comporte deux trous 75 et 76 qui vont chacun de sa face arrière jusqu'au logement dans lequel est placée la cavité 1. Le trou 75 qui débouche au niveau de la plaque 3 est un trou lisse destiné à permettre une mesure de température au voisinage de cette plaque; le trou 76 est un trou fileté destiné à recevoir une vis qui sera utilisée comme extracteur pour faciliter l'extraction de la cavité 1 hors du bloc 7 après l'opération de thermocompression qui va être décrite à l'aide des figures 4 et 5.

La figure 4 est une une en coupe sur laquelle apparaissent les pièces 1 à 7 telles qu'elles ont été assemblées dans l'assemblage décrit à l'aide des figures précédentes. Le plan de la coupe est le plan parallèle au fond 14 (voir figure 1) de la cavité 1 et passant par le grand axe XX du résonateur 2.

Sur la figure 4 les pièces 1 à 7 sont représentées posées sur une plaque chauffante 9 dont seule la partie supérieure a été représentée. Cette plaque chauffante permet de chauffer le support 3 jusqu'à une température T prédéterminée qui est mesurée à l'aide d'un thermomètre disposé à l'intérieur du trou 75 du bloc 7 (voir figure 3); cette température T est déterminée expérimentalement pour assurer une bonne thermocompression du support 3 compte tenu du matériau qui le constitue et de son volume. Quand cette température T est atteinte, elle est maintenue pendant un temps dont la durée varie en fonction de la constitution et du volume du support puis le support 3 est comprimé à l'aide d'une presse, munie d'une pressiomètre, qui vient enfoncer le piston 6; cette presse a été symbolisée par une flèche, P.

Sous l'action de la chaleur le matériau thermocompressible constitutif du support 3 devient mou, la pression à laquelle il est alors soumis amène une réduction de son épaisseur par écrasement et un étalement latéral qui remplit les rainures creusées dans la paroi de la cavité 1 et du conducteur 2.

Quand une valeur prédéterminée, obtenue après différents essais sur d'autres ensembles cavité-résonateur-support identiques, est atteinte pour la pression P, l'action de la presse cesse et l'enceinte 7—8 (voir figure 3) est ouverte. Le support 3 est alors soumis à un refroidissement rapide qui, dans le cas de l'exemple décrit, est produit par une soufflerie d'air froid. Les cales 4 et 5 sont alors retirées ainsi que le piston 6.

La figure 5 montre, dans une vue en coupe par le plan parallèle au fond 14 (voir figure 1) de la cavité et passant par le grand axe XX du conducteur, comment se présente alors le support 3 par rapport à la cavité 1 et au conducteur 2: les rainures pratiquées dans la cavité et le conducteur sont totalement remplies; ainsi le support, qui après refroidissement a retrouvé sa dureté initiale, assure une liaison rigide entre la cavité et le conducteur. La précision du positionnement du conducteur dans la cavité est essentiellement déterminée par la précision de réalisation des cales 4 et 5; une précision du positionnement du dixième de millimètre a été atteinte avec un usinage des pièces 1, 2, 4 et 5 au vingtième dans la réalisation qui a servi d'exemple à la description et dont les caractéristiques principales sont indiquées ci-après.

Etant donné que les figures 1 à 5 ont été dessinées en respectant les rapports entre les dimensions des différents éléments, il suffit d'indiquer que le conducteur 2 mesurait 4 cm.

Le matériau choisi pour le support 3, dans la réalisation décrite est un copolymère de polystyrène vendu sous la marque Polypenco avec la référence Q 2000.5; il s'agit d'un produit rigide et transparent ayant une constante diélectrique de 2,52. Le support ainsi constitué a été chauffé à 140°C, maintenu 6 minutes à cette température sur la table chauffante puis comprimé sous une pression de l'ordre de $6.10^7$ pascals; la température du support a alors été ramenée rapidement à 60°C. Les essais qui ont été effectués sur des cavités réalisées comme indiqué ci-avant avec ce produit ont permit de montrer que ce support en copolymère de polystyrène thermocomprimé

— était utilisable jusqu'à 10 GHz sans problèmes particuliers,

— peut être stocké à des températures comprises entre −40 et +80°C sans inconvénients,

— supporte sans dommages des accélérations de 10 g et des vibrations à amplitude constance de 0,2 mm à des fréquences allant de 5 à 100 Hz.

Ainsi l'exemple de réalisation qui a été décrit, en ce qui concerne les caractéristiques mécaniques, se distingue principalement des réalisations classiques à support en polytétrafluoroéthylène:

— par une précision de positionnement qui n'est pas tributaire de la précision de réalisation, de positionnement et de fixation du support,

— par une résistance aux contraintes mécaniques très fortement supérieure à celle du polytétrafluoroéthylène.

La présente invention n'est pas limitée à l'exemple décrit, c'est ainsi que d'autres matières plastiques thermocompressibles peuvent être employées dans la mesure où leurs caractéristiques sont compatibles avec les caractéristiques recherchées pour le dispositif comportant une cavité dans laquelle doit être fixé un conducteur formant un résonateur. La première de ces caractéristiques sera également une constante diélectrique aussi faible que possible, une valeur de constante diélectrique inférieure à 2,6 étant, le plus souvent, considérée comme satisfaisante.

De même les rainures pratiquées dans la paroi interne de la cavité et dans le conducteur pourront être remplacées par des entailles de dimensions plus réduites qui, à la limite, pourront être de simples trous, étant entendu que ces entailles seront disposées de manière à être remplies, après l'opération de thermocompression, par le matériau constituant le support.

## Revendications

1. Procédé de montage d'un dispositif comportant une cavité (1) hyperfréquence, un conducteur intérieur (2) et un support (3) pour fixer le conducteur dans la cavité, ce support étant constitué par une plaque de constante diélectrique inférieure à 2,6, au contact de la paroi interne de la cavité, et percée d'un trou à travers lequel passe le conducteur, la cavité (1) comportant une première partie (1) destinée à être rendue solidaire du support, au moins une entaille (10, 11) étant pratiquée dans la paroi interne de la première partie et dans le conducteur, la plaque (3) étant disposée dans la première partie avec l'un de ses bords recouvrant l'entaille de la première partie, le conducteur traversant un trou percé dans la plaque et ayant son entaille (20) à l'intérieur du trou, caractérisé en ce qu'un ensemble mécanique (4, 5, 6, 7, 8) comportant au moins une cale (4) et un piston (6) à monter de part et d'autre de la plaque, est disposé de manière à délimiter avec la première partie et le conducteur un volume contenant la plaque, en ce que la plaque est chauffée à une température T puis comprimée à cette température sous une pression P, donnée par le piston, puis ramenée à basse température par refroidissement forcé, puis en ce que l'ensemble mécanique est retiré.

2. Procédé selon la revendication 1, caractérisé en ce que la plaque est un copolymère de polystyrène du type de celui vendu sous la marque Polypenco avec la référence Q 2000.5, en ce que T est égal environ à 140°C, en ce que P est de l'ordre de $6.10^7$ pascals, et en ce que, juste après qu'elle ait été comprimée, la plaque (3) est ramenée par refroidissement forcé à environ 60°C.

3. Procédé selon la revendication 1, caractérisé en ce qu'il consiste à utiliser, comme ensemble mécanique, un ensemble mécanique comportant également une enceinte (7, 8) qui épouse sensiblement les contours extérieurs de la première partie pour former une bride et éviter la déformation de la première partie pendant que la plaque est comprimée.

## Patentansprüche

1. Verfahren zum Zusammenbau einer Vorrichtung, die einen Mikrowellenhohlraum (1), einen Innenleiter (2) und einen Halter (3) zum Befestigen des Halters im Hohlraum aufweist, wobei dieser Halter aus einer Platte mit einer Dielektrizitätskonstanten unter 2,6 besteht, die in Kontakt mit der Innenwand des Hohlraums steht und eine Öffnung aufweist, durch die der Leiter verläuft, wobei der Hohlraum (1) einen ersten Bereich (1) aufweist, der fest mit dem Halter verbunden werden soll, wobei mindestens eine Kerbe (10, 11) in die Innenwand des ersten Bereichs und in den Leiter eingearbeitet ist und wobei die Platte (3) in dem ersten Bereich mit einer ihrer Ränder angeordnet ist, der die Kerbe des ersten Bereichs überdeckt, während der Leiter eine Öffnung in der Platte durchquert und seiner Kerbe (20) sich im Inneren des Lochs befindet, dadurch gekennzeichnet, daß eine mechanische Einheit (4, 5, 6, 7, 8) bestehend aus mindestens einem Distanzstück (4) und einem Kolben (6), die auf beiden Seiten der Platte angebracht werden sollen, so angeordnet ist, daß sie mit dem ersten Bereich und dem Leiter ein die Platte enthaltendes Volumen begrenzt, daß die Platte auf eine Temperatur R erhitzt und dann bei dieser Temperatur unter einem Druck P, der von dem Kolben gegeben wird, komprimiert und dann durch Zwangsabkühlung auf niedere Temperatur gebracht wird, und daß dann die mechanische Einheit entfernt wird.

2. Verfahren nach Anspruch 1, dadurch gekennzeichnet, daß die Platte ein Polystyrol-Copolymer von dem Typ ist, der unter der Marke Polypenco mit der Referenz Q 2000.5 verkauft wird, daß T gleich etwa 140°C ist, daß P etwa 6.10$^7$ Pa beträgt und daß die Platte (3), sofort nachdem sie komprimiert wurde, durch Zwangsabkühlung auf etwa 60°C abgekühlt wird.

3. Verfahren nach Anspruch 1, dadurch gekennzeichnet, daß es darin besteht, als mechanische Einheit eine mechanische Einheit zu verwenden, die außerdem ein Gehäuse (7, 8) aufweist, das im wesentlichen die äußeren Umrisse des ersten Bereichs eng umschließt, um einen Flansch zu bilden und die Verformung des ersten Bereichs zu verhindern, während die Platte komprimiert wird.

**Claims**

1. A method for assembling a device comprising a microwave cavity (1), an inner conductor (2) and a support (3) for fixing the conductor in the cavity, this support being constituted by a plate having a dielectricity constant of less than 2,6, in contact with the inner wall of the cavity and with a hole through which passes the conductor, the cavity (1) comprising a first part (1) intended to be made integral with the support, at least one recess (10, 11) being formed in the inner wall of the first part and in the conductor, the plate (3) being disposed in the first part with one of its edges covering the recess of the first part, the conductor passing through a hole made in the plate and its recess (20) being inside the hole, characterized in that a mechanical unit (4, 5, 6, 7, 8) comprising at least one spacer (4) and one piston (6) to be mounted on either side of the plate, is disposed so as to delimit with the first part and the conductor a volume containing the plate, in that the plate is heated up to a temperature T and then compressed at this temperature under a pressure P, given by the piston, then brought back to low temperature by forced cooling, then in that the mechanical unit is removed.

2. A method according to claim 1, characterized in that the plate is a polystyrene copolymer of the type which is marketed under the trademark Polypenco with the reference Q 2000.5, in that T is equal to about 140°C, in that P is of the order of 6.10$^7$ Pa, and in that, just after having been compressed, the plate (3) is brought back to about 60°C by forced cooling.

3. A method according to claim 1, characterized in that it consist of using, as mechanical unit, a mechanical unit comprising also an enclosure (7, 8) which essentially is adapted to the outer contours of the first part to form a flange and to prevent the deformation of the first part while the plate is being compressed.

Fig. 1

Fig. 2

Fig. 3

Fig.4

Fig.5